# EUROPÄISCHE PATENTANMELDUNG

(11) **EP 1 440 730 A1**
(43) Veröffentlichungstag der Anmeldung: **28.07.2004**
(21) Anmeldenummer: 04001067.0
(22) Anmeldetag: 20.01.2004
(51) Int. Cl.: B01J 19/32

(54) **Packungselement für eine Kolonne**

(30) Priorität: 22.01.2003 DE 10302331
(71) Anmelder: BASF AKTIENGESELLSCHAFT, 67056 Ludwigshafen (DE)
(72) Erfinder: Althaus, Klaus, 68163 Mannheim (DE); Juchem, Udo, 67295 Bolanden (DE)
(74) Vertreter: Isenbruck, Günter, Dr.

(57) **Zusammenfassung**

Es wird ein Packungselement (1) für eine Kolonne zur Durchführung eines Reaktivtrennverfahrens eines Reaktionsgemisches in Gegenwart eines heterogenen Katalysators vorgeschlagen, aufweisend Räume (2) zur Aufnahme des heterogenen Katalysators sowie katalysatorfreie Räume (3), das dadurch gekennzeichnet ist, dass die Räume (2) zur Aufnahme des heterogenen Katalysators durch oben offene und unten geschlossene Hohlzylinder (4) umschlossen sind, die vertikal, in Richtung der Kolonnenlängsachse, ausgerichtet und deren Wände für das Reaktionsgemisch durchlässig und für den heterogenen Katalysator undurchlässig sind.

## Beschreibung

Die Erfindung betrifft ein Packungselement für eine Kolonne zur Durchführung eines Reaktivtrennverfahrens, eine Packung, gebildet aus zwei oder mehreren Packungselementen, eine Kolonne mit einer Packung sowie eine Verwendung.

In Reaktivtrennverfahren werden chemische Reaktionen und thermische Stofftrennungen simultan in einer Kolonne durchgeführt. Gegenüber der sequentiellen Durchführung von Reaktion und Stofftrennung ermöglichen Reaktivtrennverfahren u.a. die Überschreitung thermodynamischer Limitierungen, beispielsweise die Überwindung von Trenngrenzen und eine ständige Verschiebung der Reaktionsgleichgewichte. Durch den Einsatz der Reaktivtrennverfahren konnten bereits bei vielen industriellen Prozessen Einsparungen von Investitions- und Betriebskosten erreicht werden.

Als thermische Stofftrennverfahren kommen hierbei grundsätzlich alle in der chemischen Verfahrenstechnik bekannten thermischen Stofftrennverfahren in Frage, insbesondere Destillation, Absorption, Adsorption, Extraktion oder Membrantrennverfahren.

Bei heterogen katalysierten Reaktionen muss der heterogene Katalysator im Reaktionsraum untergebracht werden. Für das simultan durchzuführende thermische Trennverfahren werden in der Regel zur Verbesserung der Trennwirkung trennwirksame Einbauten, insbesondere Packungen eingesetzt. Der heterogene Katalysator muss somit in der Packung untergebracht werden.

Aus EP-B 0 396 650 ist eine strukturierte Packung für insbesondere Reaktivdestillationen bekannt, die aus doppelwandigen Lagen besteht, die Taschen zur Aufnahme des Katalysatormaterials bilden. Die Lagen sind in der Weise strukturiert, dass sie Strömungskanäle bilden, die in einem Winkel zur Längsachse der Packung ausgerichtet sind, wobei sich Strömungskanäle benachbarter Lagen kreuzen. Die Packung hat insbesondere den Nachteil, dass Art und Menge des gewünschten Katalysators vor Fertigstellung der Packung, d.h. vor Schließung der Taschen, festgelegt sein müssen. Der in den Taschen eingeschlossene Katalysator ist somit nicht frei zugänglich, ein Zugriff ist nur durch Öffnung der Taschen, mit irreparabler Beschädigung der Packung, möglich. Aufgrund des festen Katalysatoreinschlusses ist ein schneller Katalysatorwechsel sowie die Entnahme von Katalysatorproben, beispielsweise zur Verfolgung der Desaktivierung über eine Versuchsreihe, nicht möglich. Es ist auch nicht möglich, die bereitgestellte Katalysatormenge oder -konzentration während einer Versuchsreihe zu variieren, beispielsweise zum Studium der Auswirkungen einer nachlassenden Katalysatoraktivität. Darüber hinaus ist die Packung lediglich als Einwegprodukt einsetzbar, da nach Beendigung eines Versuchs in der Regel keine Informationen über den Zustand des Katalysators vorliegen und somit ein Einsatz für weitere Versuche nicht möglich ist.

Auch in den aus DE-C 197 01 045 oder EP-A 1 197 263 bekannten strukturierten Mehrzweckpackungen ist der Katalysator in geschlossenen Hohlräumen (Kammern) eingebracht, mit den vorstehend aufgeführten Nachteilen.

Es war demgegenüber Aufgabe der Erfindung, ein Packungselement für ein Reaktivtrennverfahren zur Verfügung zu stellen, das flexibel einsetzbar, mehrfach verwendbar, variabel mit Katalysator befüllbar und somit optimal an die jeweiligen Reaktionsanforderungen angepasst werden kann und das darüber hinaus ein zuverlässiges Scale-up der Reaktions- und Trennleistung erlaubt. Das Packungselement soll als wiederverwendbares Standardbauteil eine beschleunigte Projektbearbeitung und Kostenreduzierung ermöglichen.

Die Lösung geht aus von einem Packungselement für eine Kolonne zur Durchführung eines Reaktivtrennverfahrens eines Reaktionsgemisches in Gegenwart eines heterogenen Katalysators, aufweisend Räume zur Aufnahme des heterogenen Katalysators sowie katalysatorfreie Räume.

Die Erfindung ist dadurch gekennzeichnet, dass die Räume zur Aufnahme des heterogenen Katalysators durch oben offene und unten geschlossene Hohlzylinder umschlossen sind, die vertikal, in Richtung der Kolonnenlängsachse, ausgerichtet und deren Wände für das Reaktionsgemisch durchlässig und für den heterogenen Katalysator undurchlässig sind.

Es wurde überraschend gefunden, dass durch die Ausbildung von katalysatorfreien Räumen in Form von unten geschlossenen und oben offenen Hohlzylindern, die vertikal in Richtung der Kolonnenlängsachse angeordnet sind, ein flexibel einsetzbares, wiederverwendbares Standardbauteil erhalten werden kann, das scale-up-fähig ist, wobei bei entsprechender Befüllung der Hohlzylinder kein Katalysatoraustrag erfolgt.

Das erfindungsgemäße Packungselement weist somit zum einen Räume auf, die für die Aufnahme des heterogenen Katalysators bestimmt sind und in denen überwiegend die katalytische Reaktion stattfindet, sowie Räume, die katalysatorfrei sind und in denen ausschließlich eine Stofftrennung erfolgt.

Die zur Aufnahme des Katalysators bestimmten Räumen sind als Hohlzylinder ausgebildet, mit Wänden, die für das Reaktionsgemisch permeabel, d.h. durchlässig, jedoch für den Katalysator undurchlässig sind. Diese, zur Aufnahme des Katalysators bestimmten Hohlzylinder entsprechend in erster Näherung Rohrreaktoren mit einer permeablen Reaktorwand. Sie sind erfindungsgemäß oben offen und unten geschlossen. Dadurch ist der darin eingefüllte Katalysator jederzeit frei zugänglich, ohne dass die Packung geöffnet und dabei mechanisch geschädigt werden muss. Der freie Zugang erlaubt einen schnellen Katalysatorwechsel, sowie die Entnahme von Proben zur Verfolgung der Katalysatordesaktivierung. Die Möglichkeit der Anpassung der Reaktionsleistung über die Variation der Katalysatormenge ist durch den freien Zugang auch noch innerhalb einer Versuchsreihe gegeben.

Die Art und Weise, wie die Hohlzylinder unten verschlossen sind, ist für die Funktion des erfindungsgemäßen Packungselementes nicht wesentlich. Möglich ist es beispielsweise, den Verschluss über eine Quetschverbindung oder über eine Schiene auszuführen.

Der Querschnitt der Hohlzylinder kann grundsätzlich jede geometrische Form annehmen, bevorzugt ist er kreisförmig oder polygonal.

Es ist vorteilhaft, in den katalysatorfreien Räumen trennwirksame Einbauten, insbesondere profilierte Gewebe- oder Blechlagen einzubringen, wobei die Blechlagen bevorzugt perforiert sind, oder eine zumindest teilweise offenporige Keramik.

Die Stofftrennung, die überwiegend in den katalysatorfreien Räumen stattfindet, kann beispielsweise eine Destillation, Absorption, Adsorption, Extraktion oder ein Membrantrennverfahren sein.

Das Reaktivtrennverfahren ist bevorzugt eine Reaktivdestillation, wobei unter dem Begriff Destillation vorliegend auch die in der Verfahrenstechnik in der Regel eingesetzte mehrstufige Destillation, die sogenannte Rektifikation, verstanden wird.

Durch die konkrete Ausgestaltung der trennwirksamen Einbauten für beispielsweise die destillative Stofftrennung, durch insbesondere die Anzahl der in den katalysatorfreien Räumen eingebrachten Trennlagen sowie deren Strukturierung, besonders Oberflächenstrukturierung, kann der Arbeitsbereich der trennwirksamen Einbauten, insbesondere Packungen, d.h. die maximale Flüssigkeits- und Dampfbelastung sowie die destillative Trennleistung pro Meter Packung auf den Anwendungsfall optimiert angepasst werden.

Für Kolonnen mit relativ kleinem Innendurchmesser, von unterhalb 100 mm, bevorzugt im Bereich von 30 bis 80 mm, sogenannten Miniplant-Kolonnen, ist es vorteilhaft, das Packungselement mit einem Verhältnis von Höhe zu Durchmesser von kleiner oder gleich 3 zu 1, bevorzugt von etwa 1 zu 1 auszubilden.

Sofern das Packungselement für den Einbau in eine Kolonne mit einem Innendurchmesser größer oder gleich 100 mm, bevorzugt mit einem Innendurchmesser im Bereich von 200 bis 5000 mm, bestimmt ist, ist es vorteilhaft, das Packungselement mit einer Höhe im Bereich von 100 bis 500 mm auszubilden.

Bevorzugt werden somit, bezogen auf ihre Höhe, relativ kurze Packungselemente. Durch die Anordnung von zwei oder mehreren dieser relativ kurzen Packungselemente übereinander in einer Kolonne wird gegenüber einer Anordnung mit einem einzigen, entsprechend längerem Packungselement, eine bessere Gleichverteilung des Katalysators über die Kolonnenhöhe erreicht.

Darüber hinaus können Packungen, die aus zwei oder mehreren übereinander angeordneten Packungselementen gebildet sind, bevorzugt in der Weise aufgebaut sein, dass aufeinander folgende Packungselemente gegeneinander um 0 bis 90° verdreht, besonders bevorzugt gegeneinander um 45° verdreht, angeordnet sind. Dadurch wird die Gleichverteilung des Katalysators über den Kolonnenquerschnitt verbessert.

Es ist vorteilhaft, das Packungselement beziehungsweise die Packung nicht unmittelbar an die Kolonneninnenwand anstoßen zu lassen, sondern zwischen Kolonneninnenwand und Packungselement beziehungsweise Packung Randabweiser vorzusehen, die beispielsweise kragenförmig ausgebildet sein können. Dadurch kann insbesondere verhindert werden, dass Flüssigkeit an der Kolonneninnenwand abfließt, ohne die trennwirksamen Einbauten zu passieren,

Die Erfindung ist grundsätzlich nicht eingeschränkt bezüglich des in die Hohlzylinder einzufüllenden Katalysatormaterials. Der Katalysator kann eine insbesondere gelartige Flüssigkeit oder ein Feststoff, ein Vollkatalysator oder ein geträgerter Katalysator sein. Als Feststoffkatalysatoren können beispielsweise Ionentauscher eingesetzt werden. Die Geometrie der Katalysatorteilchen ist ebenfalls nicht eingeschränkt. Bevorzugt sind kugelförmige Katalysatorteilchen, mit Durchmessern bevorzugt im Bereich von etwa 0,3 bis 1,5 mm oder stabförmige Katalysatorteilchen. Die Schüttungshöhe des Katalysatormaterials in den Hohlzylindern kann nach Bedarf eingestellt werden, wobei darauf geachtet werden muss, dass unter den konkreten verfahrenstechnischen Bedingungen kein Katalysatoraustrag erfolgt. Es ist möglich, niedrige Katalysatorkonzentrationen bei gleichzeitig hydrodynamisch definierten Zuständen in den Hohlzylindern über den Einsatz von Placebo-Teilchen, d.h. katalytisch nicht aktiven Teilchen, beispielsweise Glasperlen, zu erreichen.

Die in die Hohlzylinder eingebrachte Katalysatormenge kann vorteilhaft in der Weise gewählt werden, dass der Katalysatorgehalt, bezogen auf das Leervolumen der Kolonne, 5 bis 80 %, insbesondere 10 bis 40 %, beträgt.

Gegenstand der Erfindung ist auch eine Kolonne zur Durchführung eines Reaktivtrennverfahrens mit einer vorstehend beschriebenen Packung. Vorteilhaft ist insbesondere die Verwendung der Kolonne zur Durchführung einer Reaktivdestillation, bevorzugt einer Veresterung, Veretherung, Umesterung, Alkylierung, Oxidation, Hydrierung, Hydrolyse, Isomerisierung oder Umisomerisierung.

Durch die Gestaltung des erfindungsgemäßen Packungselementes wird somit ein flexibel einsetzbares, wiederverwendbares Standardbauteil zur Verfügung gestellt, mit jederzeit freiem Zugang zum Katalysator. Durch die Ausgestaltung der zur Aufnahme des Katalysators bestimmten Räume wird eine gute, gleichmäßige Durchströmung des gesamten Katalysatorbettes erreicht, d.h. es werden Zonen geringerer Durchströmung, örtlicher Überhitzung sowie eine Bachbildung im Katalysatorbett vermieden. Die Verweilzeitverteilung über das Packungselement beziehungsweise über die Packung wird verbessert. Durch den freien Zugang kann der Katalysator jederzeit aus der Reaktionszone entfernt beziehungsweise die Katalysatormenge variiert werden, ohne dass das Packungselement beziehungsweise die Packung dabei beschädigt wird.

Die Erfindung wird im folgenden anhand einer Zeichnung näher erläutert.

Es zeigen im einzelnen:
- Figur 1: Die schematische Darstellung einer Ausführungsform eines erfindungsgemäßen Packungselementes in perspektivischer Darstellung,
- Figuren 2a bis 2c: Querschnitte durch Packungselemente mit unterschiedlichem Querschnitt der Hohlzylinder und
- Figuren 3a bis 3c: einzelne Hohlzylinder jeweils unterschiedlicher Geometrie.

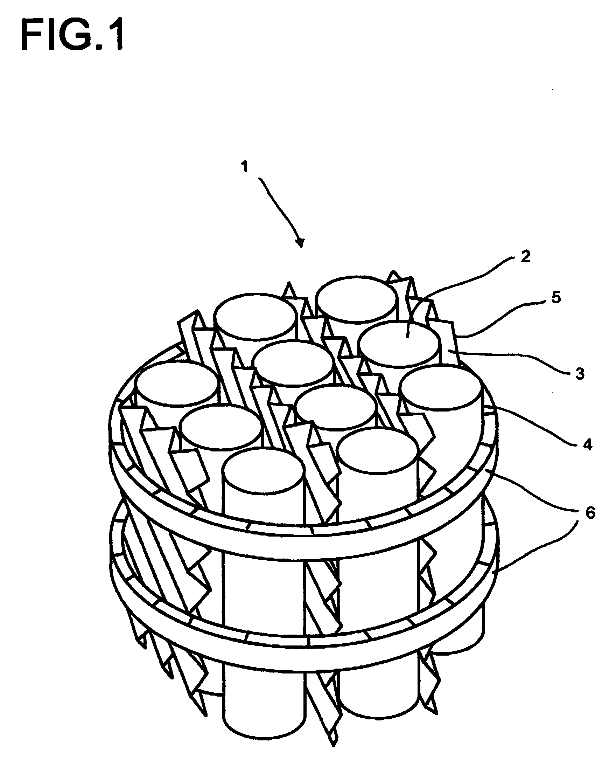

Das in Figur 1 schematisch dargestellte Packungselement 1 weist Räume 2 zur Aufnahme eines heterogenen Katalysators sowie katalysatorfreie Räume 3 auf. Die Räume 2 zur Aufnahme des Katalysators sind von Hohlzylindern 4 umschlossen. In den katalysatorfreien Räumen 3 sind trennwirksame Einbauten 5 in Form von strukturierten Lagen eingebracht. Am äußeren Umfang des Packungselementes 1 sind beispielhaft zwei Randabweiser 6 angeordnet.

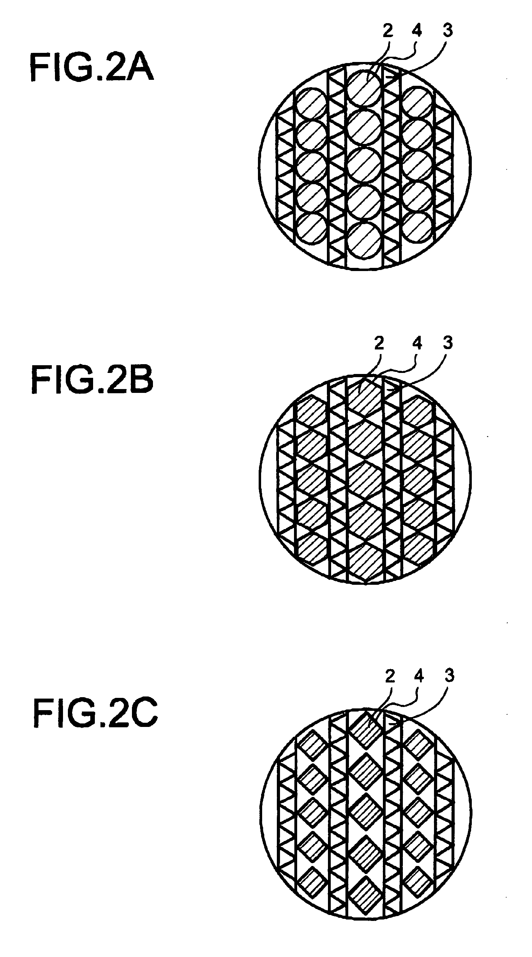

Die Querschnittsdarstellungen in den Figuren 2a bis 2c zeigen Ausführungsformen von Packungselementen 1 mit unterschiedlichen Querschnitten der Hohlzylinder 4: kreisförmige Querschnitte in Figur 2a, hexagonale Querschnitte in Figur 2b beziehungsweise quadratische Querschnitte in Figur 2c. Aus den Querschnittsdarstellungen in den Figuren 2a bis 2c ist darüber hinaus eine bevorzugte, lineare Anordnung der Hohlzylinder 4 erkennbar. Bei einer derartigen Anordnung ist es beispielsweise möglich, die Hohlzylinder 4 in U-förmige Schienen einzusetzen, und auf diese Weise unten zu verschließen.

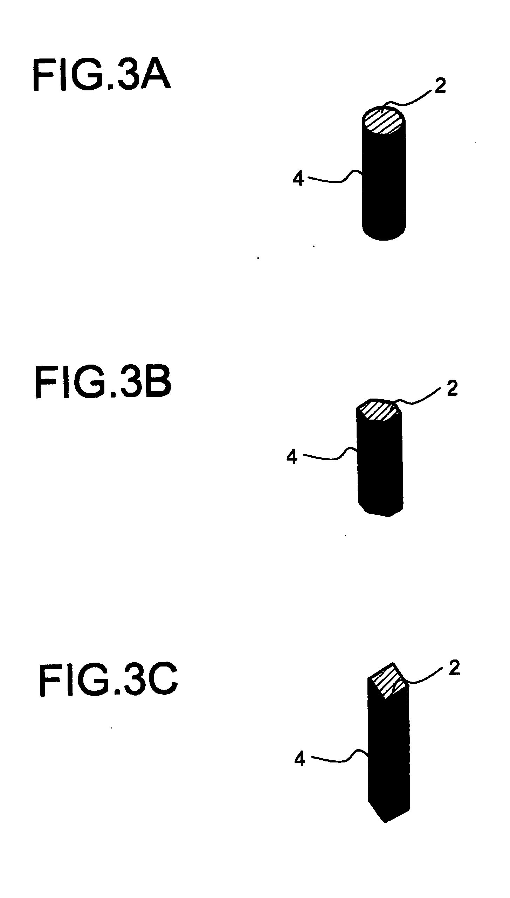

Die Figuren 3a bis 3c zeigen jeweils einen einzelnen Hohlzylinder 4, dessen Geometrie den Querschnittsdarstellungen in den Figuren 2a bis 2c entspricht.

## Patentansprüche

1. Packungselement (1) für eine Kolonne zur Durchführung eines Reaktivtrennverfahrens eines Reaktionsgemisches in Gegenwart eines heterogenen Katalysators, aufweisend Räume (2) zur Aufnahme des heterogenen Katalysators sowie katalysatorfreie Räume (3), **dadurch gekennzeichnet, dass** die Räume (2) zur Aufnahme des heterogenen Katalysators durch oben offene und unten geschlossene Hohlzylinder (4) umschlossen sind, die vertikal, in Richtung der Kolonnenlängsachse, ausgerichtet und deren Wände für das Reaktionsgemisch durchlässig und für den heterogenen Katalysator undurchlässig sind.

2. Packungselement (1) nach Anspruch 1, **dadurch gekennzeichnet, dass** in den katalysatorfreien Räumen (3) trennwirksame Einbauten (5) eingebracht sind, insbesondere profilierte Gewebe- oder Blechlagen, wobei die Blechlagen bevorzugt perforiert sind, oder eine zumindest teilweise offenporige Keramik.

3. Packungselement (1) nach Anspruch 1 oder 2, **dadurch gekennzeichnet, dass** das Reaktivtrennverfahren eine Reaktivdestillation ist.

4. Packungselement (1) nach einem der Ansprüche 1 bis 3, **dadurch gekennzeichnet, dass** der Querschnitt der Hohlzylinder (4) kreisförmig oder polygonal ist.

5. Packungselement (1) nach einem der Ansprüche 1 bis 4, **dadurch gekennzeichnet, dass** die Hohlzylinder (4) an ihrem unteren Ende durch eine Quetschverbindung oder durch eine Schiene verschlossen sind.

6. Packungselement (1) nach einem der Ansprüche 1 bis 5, **dadurch gekennzeichnet, dass** das Verhältnis von Höhe zu Durchmesser des Packungselementes (1) kleiner oder gleich 3 zu 1, bevorzugt etwa 1 zu 1 ist, sofern das Packungselement (1) zum Einbau in eine Kolonne mit einem Innendurchmesser ≤ 100 mm, bevorzugt mit einem Innendurchmesser im Bereich von 30 bis 80 mm, bestimmt ist.

7. Packungselement (1) nach einem der Ansprüche 1 bis 5, **dadurch gekennzeichnet, dass** das Packungselement mit einer Höhe im Bereich von 100 bis 500 mm ausgebildet ist, sofern das Packungselement (1) für den Einbau in eine Kolonne mit einem Innendurchmesser ≥ 100 mm, bevorzugt mit einem Innendurchmesser im Bereich von 200 bis 5000 mm, bestimmt ist.

8. Packungselement (1) nach einem der Ansprüche 1 bis 7, **dadurch gekennzeichnet, dass** die in die Hohlzylinder (4) eingebrachte Katalysatormenge in der Weise geregelt wird, dass der Katalysatorgehalt, bezogen auf das Leervolumen der Kolonne 5 bis 80 %, bevorzugt 10 bis 40 %, beträgt.

9. Packung für eine Kolonne zur Durchführung eines Reaktivtrennverfahrens, gebildet aus zwei oder mehreren übereinander angeordneten Packungselementen (1) nach einem der Ansprüche 1 bis 8, die vorzugsweise gegeneinander um 0 bis 90° verdreht, besonders bevorzugt gegeneinander um 45° verdreht angeordnet sind.

10. Verwendung einer Kolonne mit einer Packung nach Anspruch 9 zur Durchführung eines Reaktivtrennverfahrens, insbesondere einer Reaktivdestillation, bevorzugt einer Veresterung, Veretherung, Umesterung, Alkylierung, Oxidation, Hydrierung, Hydrolyse, Isomerisierung oder Umisomerisierung.
